# EUROPÄISCHE PATENTSCHRIFT

(11) **EP 3 015 444 B1**
(45) Veröffentlichungstag und Bekanntmachung des Hinweises auf die Patenterteilung: **26.06.2019**
(21) Anmeldenummer: 14003670.8
(22) Anmeldetag: 30.10.2014
(51) Int. Cl.: C05F 7/00, C05F 17/00, C02F 11/18, C02F 3/12, C02F 1/02

(54) **Verfahren und Vorrichtung zur Behandlung von organischer Masse mit Eindickung und thermischer Behandlung**
Method and device for treating organic mass with thickening and thermal treatment
Procédé et dispositif de traitement de masse organique présentant une gélification et traitement thermique

(43) Veröffentlichungstag der Anmeldung: 04.05.2016
(73) Patentinhaber: Eliquo Stulz GmbH, 79865 Grafenhausen (DE)
(72) Erfinder: Knörle, Ulrich, 88289 Waldburg (DE); Geraats, Bert, 3722 GV Bilthoven (NL); Buchmüller, Marianne, Dr., 79777 Ühlingen-Birkendorf (DE)
(74) Vertreter: Grünecker Patent- und Rechtsanwälte PartG mbB

(56) Entgegenhaltungen:
- EP-A1- 0 319 789
- FR-A1- 2 843 106
- US-A- 5 141 646
- US-A1- 2014 251 902

## Beschreibung

Die Erfindung bezieht sich auf ein Verfahren zur Behandlung von organischer Masse, insbesondere Klärschlamm, und eine Vorrichtung zur Behandlung von organischer Masse, insbesondere Klärschlamm, die einen Faulbehälter und einen stromaufwärts davon angeordneten Eindicker umfasst.

Bei der Reinigung von kommunalem und gewerblichem Abwasser mittels mechanischbiologischer Verfahren fallen Klärschlämme an, die entsorgt bzw. in den Stoffkreislauf zurückgeführt werden müssen. Durch die Schlammfaulung als Standardverfahren der biologischen Schlammstabilisierung wird eine deutliche Reduzierung der Schlammtrockenmasse erreicht. Neben dem Gewinn verwertbaren Klärgases ergeben sich durch die Reduzierung der zu entsorgenden Schlammtrockenmasse wirtschaftliche Vorteile für den Kläranlagenbetrieb.

So ist es beispielsweise aus der DE 198 58 187 C5, der EP 1 150 924 B1, der DE 10 2007 037 202 A1 sowie aus der FR 2 942 792 A1 bekannt, dass organische Masse eingedickt wird, bevor diese einer thermischen Desintegration zugeführt wird und darauffolgend in eine Faulstufe gelangt. Durch die thermische Desintegration soll der Ausfaulgrad des behandelten Schlamms erhöht werden.

Aus der WO 2007/117152 A1 ist es bekannt, dass organisches Material aus einem Faultank entnommen und einem Temperaturregelkreis zugeführt wird, um die Temperatur im Faultank zu regeln.

Bei der Eindickung der organischen Masse wird eine Erhöhung der Feststoffkonzentration erreicht. Allerdings führt dies zu einem starken Anstieg der Viskosität des Schlamms. Mit steigender Viskosität des Schlamms steigt aber der Druckverlust in den für die thermische Desintegration eingesetzten Wärmeübertragern, insbesondere da eine Erhöhung der Feststoffkonzentration zu Anhaftungen, Inkrustierung und Verblockungen führt, und da aufgrund der erhöhten Viskosität zudem die für einen optimalen Wärmeübergang notwendigen turbulenten Strömungsverhältnisse nicht mehr erzielt werden können, wodurch der Wärmeübergang zunehmend durch Wärmeleitung bestimmt wird. Folglich wird durch die Eindickung die Leistungsfähigkeit der thermischen Desintegrationsstufe negativ beeinflusst.

Diese Probleme treten insbesondere auf, wenn indirekte Wärmeübertrager für die thermische Desintegration eingesetzt werden, allerdings besteht auch bei direkten Wärmeübertragern in denen beispielsweise Dampf in die organische Masse injiziert wird, ein erhebliches Risiko bezüglich der Ausbildung von Inkrustierungen.

Somit liegen die im Stand der Technik bevorzugten Feststoffkonzentrationen im eingedickten Klärschlamm bei lediglich 5% bis 7%. Zudem kann bei höheren Feststoffkonzentrationen - zusätzlich zu den vorgenannten Problemen - eine ausreichende Durchmischung des Faulraums nicht mehr gewährleistet werden und der Faulungsvorgang läuft damit unvollständig und instabil ab. So wird in der US 5,141,646 A und EP 0 319 789 A1 Faulung ohne vorherige Eindickung offenbart.

Die gattungsgemäße US 2014/0251902 A1 offenbart eine Vorrichtung und ein Verfahren für eine thermisch biologische Zersetzung und Entwässerung von Biomasse, wobei die Biomasse in einer Vorentwässerungseinheit eingedickt, in einem Wärmetauscher erhitzt, und daraufhin in einen Faultank geleitet wird. In der Hydrolyseeinheit entstehende Gase und Ausschusswasser aus einer nachgelagerten Entwässerungseinheit werden zurück zum Faultank geführt. Eine Rückführung der Feststoffe zur vollständigen Ausfaulung findet nicht statt. Zudem kann beim Erhitzen der eingedickten organischen Masse in dem dem Faultank vorgelagerten Wärmetauscher Anbrand entstehen.

Die Aufgabe der vorliegenden Erfindung ist es, die vorgenannten Probleme zu überwinden und ein effizientes Verfahren sowie eine effiziente Vorrichtung zur Behandlung von organischer Masse bereitzustellen, wobei insbesondere die Faulleistung erhöht werden soll, während Inkrustierungen während der thermischen Behandlung vermieden oder reduziert werden sollen.

Dies wird erreicht durch ein Verfahren zur Behandlung von organischer Masse, insbesondere Klärschlamm, mit den folgenden Schritten: Zunächst wird die organische Masse zur Erhöhung der Feststoffkonzentration eingedickt. Die eingedickte organische Masse wird direkt in einen Faulbehälter zugeführt. Dann wird organische Masse aus dem Faulbehälter mittels einer Rezirkulationsleitung entnommen, thermisch behandelt und in den Faulbehälter rückgeführt.

Das erfindungsgemäße Verfahren ermöglicht die Effizienz der Behandlung der organischen Masse zu erhöhen.

Durch die Entnahme eines Teilstroms der organischen Masse aus dem Faulbehälter nach dem Aufheizen im Faulbehälter, wird eine Verringerung der Viskosität erreicht. Die eingedickte organische Masse wird zunächst mit der bereits im Faulbehälter vorhandenen, vorgewärmten organischen Masse vermischt und dadurch erwärmt, was eine Reduzierung der Viskosität zur Folge hat. Weiterhin kann die Limitierung der maximalen Feststoffkonzentration im Faulraum hinsichtlich der Aufrechterhaltung einer ausreichenden Faulraumdurchmischung deutlich vermindert werden, da die Rückführung der entnommenen organischen Masse eine Umwälzung im Faulraum bewirkt. Zudem wird die Viskosität der rückgeführten organischen Masse durch die thermische Behandlung reduziert. Somit ist ein Eindicken auf höhere Feststoffkonzentrationen als im Stand der Technik möglich.

Somit werden die Probleme im Stand der Technik bezüglich hoher Druckverluste, schlechten Wärmeübergang und Ausbildung von Belägen auf Wärmeübertragungsflächen deutlich vermindert.

Damit kann die Größe des Faulbehälters reduziert werden, die ein wesentlicher Faktor im Bezug auf die Investitions- und Betriebskosten der Behandlung von organischer Masse sind. Durch die erfindungsgemäß mögliche erhöhte Raumbelastung kann mit einem kleineren Faulbehälter der gewünschte Behandlungsdurchsatz an organischer Masse erreicht werden.

Der Faulbehälter wird insbesondere als sogenannter volldurchmischter Reaktor betrieben, dessen wesentliches Merkmal aufgrund der fehlenden Feststoff-Rückhaltung eine mit der hydraulischen Aufenthaltszeit identische Aufenthaltszeit der Biomasse im Faulbehälter ist. Aufgrund der limitierten Wachstumsgeschwindigkeit anaerober Bakterien werden deshalb Faulbehälter und insbesondere Faultürme in aller Regel für hydraulische Aufenthaltszeiten von 15 bis 25 Tagen dimensioniert, wohingegen Aufenthaltszeiten von unter 10 Tagen zu instabilen Betriebszuständen aufgrund eines dadurch erhöhten Auswaschens der aktiven Biomasse aus dem Faulbehälter führen kann. Die minimale Größe eines Faulbehälters wird also auch durch die Bakterienrückhaltung bzw. die Wachstumsgeschwindigkeit der Bakterien im Faulturm begrenzt. Durch die erfindungsgemäße Möglichkeit der Eindickung der organischen Masse auf höhere Werte kann die Bakterienrückhaltung bzw. die Wachstumsgeschwindigkeit der Bakterien im Faulturm verbessert werden. Die organische Masse wird im Faulbehälter, der insbesondere durch einen Faulturm gebildet wird, zur Faulung vorteilhafterweise auf Temperaturen zwischen 25°C und 60°C, bevorzugt jedoch im mesophilen Bereich zwischen 33°C und 39°C, gehalten.

Die Viskositätsverminderung in diesem Temperaturbereich ist reversibel: sinkt die Temperatur nach dem Erwärmen wieder, nimmt die Viskosität der organischen Masse wieder zu, d.h. nach dem Abkühlen auf Ausgangstemperatur wird bereits nach kurzer Zeit auch der Ausgangswert der Viskosität wieder erreicht.

Eigene Untersuchungen zeigen, dass im Temperaturbereich von 30°C bis 60°C die dynamische Viskosität von organischer Masse in Form von Faulschlamm mit einer Feststoffkonzentration von 3% bis 4% als Funktion der Temperatur mit folgender empirischer Gleichung beschrieben werden kann: η = 306 x T^{-0,946}, mit: η = dynamische Viskosität in mPas, T = Temperatur in °C.

Insbesondere ist die thermische Behandlung eine thermische Hydrolyse. Die thermische Hydrolyse ist eine effiziente Möglichkeit des Aufschließens der im Schlamm enthaltenen Mikroorganismen und macht diese dadurch dem anaeroben und aeroben Abbau leichter zugänglich. Im erhitzten organischen Material findet ein Hydrolyseprozess statt, wodurch Zellen und Zellklumpen aufgebrochen und löslich und somit der Faulung leichter zugänglich gemacht werden. Damit kann ein höheres Potential für die Umwandlung der organischen Masse und für die Stabilisierung erreicht werden. Aufgelöste bzw. hydrolysierte organische Feststoffe faulen vollständiger aus als dies bei kompakten, nicht aufgeschlossenen Zellen der Fall ist. Der Aufschluss der zellulären organischen Masse erhöht sich mit dem Grad der Hydrolyse.

Insbesondere wird die thermische Behandlung als hochthermisches Verfahren bei Temperaturen >100°C durchgeführt, wobei auch niederthermische Behandlungsverfahren möglich sind, bei denen Temperaturen <100°C vorherrschen.

Vorteilhafterweise wird die organische Masse bei der thermischen Behandlung auf eine Temperatur von 120°C bis 170°C, und vorteilhafterweise auf 140°C bis 160°C, erwärmt. Durch die thermische Behandlung der organischen Masse bei Temperaturen von über 100°C und insbesondere bei 140°C bis 160°C kommt es zu einer irreversiblen Verminderung der Viskosität. Insbesondere wird die Viskosität des thermisch behandelten Faulschlamms auf weniger als 50% des Ausgangswertes vermindert, insbesondere auf weniger als 35% und in einer Ausführungsform auf ca. 30%.

Durch die Zirkulierung der organischen Masse mittels der Rezirkulationsleitung und durch die thermische Behandlung während der Zirkulierung kann die Faulraumdurchmischung verbessert werden, einerseits durch die dadurch eingebrachte Strömung im Faulbehälter und andererseits durch eine thermische, irreversible und reversible Reduzierung der Viskosität der zirkulierten organischen Masse. Damit kann die Raumbelastung des Faulbehälters deutlich gesteigert werden, da die kritische Viskosität bei der eine ausreichende Faulraumdurchmischung gerade noch aufrecht erhalten werden kann, erst bei deutlich höheren Raumbelastungen erreicht wird. Dem Faulbehälter kann somit höher eingedickte Masse zugeführt werden.

In einem Ausführungsbeispiel wird die organische Masse nach erfolgter thermischer Behandlung abgekühlt, bevor die thermisch behandelte organische Masse erneut dem Faulbehälter zugeführt wird. Insbesondere wird die organische Masse auf eine Temperaturdifferenz von weniger als 50°C, vorteilhafterweise weniger als 35°C und insbesondere weniger als 10°C über der Prozesstemperatur im Faulbehälter abgekühlt. Das Abkühlen kann durch einen Wärmetauscher erfolgen, der insbesondere mit einem Wärmetauscher im Aufheizbereich der thermischen Behandlung über eine Wärmemittelleitung verbunden sein kann, sodass die beim Abkühlen gewonnene Wärme zum Vorwärmen der organischen Masse vor der thermischen Behandlung verwendet werden kann. In vielen Ausführungsformen wird aber keine oder eine eher geringe Abkühlung nach der thermischen Behandlung vorgesehen. Dies ist insbesondere vorteilhaft, wenn keine Vorerwärmung der eingedickten organischen Masse vor dem Eintritt in den Faulbehälter erfolgt. Somit kann die gesamte Prozesswärme, die für das Aufheizen der organischen Masse auf Faultemperatur und die Wärmeverluste im Faulbehälter erforderlich ist, über die thermische Behandlung der organischen Masse eingebracht werden.

In einer Ausführungsform erfolgt das Eindicken der organischen Masse bis zu einer Feststoffkonzentration im Bereich von 7% bis 20%, bevorzugt im Bereich von 10% bis 15%. Durch die erhöhte Feststoffkonzentration kann eine erhöhte Konzentration von ausfaulbaren Material im Faulbehälter vorliegen, wodurch der Ausfaulvorgang effizienter abläuft. Weiterhin wird dadurch die höhere Viskosität der organischen Masse erreicht, die verhindert, dass Bakterien leicht aus dem Faulbehälter ausgeschwemmt werden.

Vorteilhafterweise liegt das Verhältnis der Mengenflüsse der Zuführung zum Faulbehälter und der Rückführung über die thermischen Behandlung im Bereich von 0,5 bis 1,5. D.h. am unteren Ende des Bereichs wird ein Mengenteil des Zuflusses zum Faulbehälter durch frisch eingedickte organische Masse gebildet und zwei Teile durch rückgeführte, thermisch behandelte organische Masse. Am oberen Ende des Bereichs werden drei Mengenteile der Zuführung zum Faulbehälter durch frisch eingedickte Masse gebildet und zwei Mengenteile durch rückgeführte, thermisch behandelte Masse. Je höher dieses Verhältnis der Mengenflüsse ist, desto höher ist die Viskosität der organischen Masse im Faulbehälter bei ansonsten gleichen Prozessparametern.

In einer Ausführungsform wird die organische Masse für die thermische Behandlung mittels der Rezirkulationsleitung direkt aus dem Faulbehälter in ein Wärmetauschersystem eingeleitet. Insbesondere ist das Wärmetauschersystem mit dem Faulbehälter direkt über eine Leitung verbunden. Die Wärmeübertragung vom Wärmeträgermedium auf die organische Masse kann entweder direkt oder indirekt erfolgen. Bei einem direkten Wärmetausch tritt ein heißes Medium in direkten Kontakt mit der zu erwärmenden organischen Masse. Ein Beispiel hierfür ist die Einleitung von Dampf in die organische Masse durch Dampfinfusion oder Dampfinjektion. Beim indirekten Wärmeübergang erfolgt die Wärmeübertragung ohne direkten Kontakt zwischen Wärmeträgermedium und wärmeaufnehmenden Medium. Das Wärmeträgermedium kann dabei insbesondere Wasser oder ein Thermalöl sein, während das wärmeaufnehmende Medium die organische Masse ist. Eine physische Barriere aus einem wärmeleitenden Material, insbesondere Stahl, trennt dabei die beiden Medien hermetisch voneinander ab. Der Wärmetauscher ist insbesondere so gestaltet, dass die Ablagerungen und Anhaftungen organischer und anorganischer Bestandteile der organischen Masse auf den Wärmeübertragungsflächen reduziert werden können. Im Gegensatz zu Systemen bei denen sämtlicher Schlamm nach dem Eindicker und vor dem Faulbehälter einen Wärmetauscher zur thermischen Desintegration passiert, können die Prozessparameter im Wärmetauscher des erfindungsgemäßen Rückführkreislaufes flexibler eingestellt werden. Insbesondere wird die zu behandelnde Klärschlammmenge als Gesamt-Feststoff-Fracht oder Fracht der organischen Feststoffe (Masse pro Zeiteinheit) in Abhängigkeit der Viskosität des zu behandelnden Schlammes, der Viskosität des Schlammes in der Faulung und der Viskosität des Schlammes in dem Wärmetauscher eingestellt, wobei weitere relevante Größen der Druckverlust im Wärmetauscher und die Wärmeübergangszahl von Wärmeträgermedium zur organischer Masse im Wärmetauscher sind.

Vorteilhafterweise ist die organische Masse Schlamm aus biologischen Abwasserbehandlungsanlagen. Darin sind gewöhnlich organische Strukturen in Form von Zellen enthalten, die aufgeschlossen werden müssen, um den Faulungsprozess effizienter zu gestalten. Weiterhin ist es aus hygienischen Gründen wichtig, dass die teilweise schwer abbaubare organische Zellsubstanz aufgeschlossen wird, um zu einem hygienisch unbedenklichen Produkt zu kommen, das beispielsweise landwirtschaftlich verwertet werden kann.

In einer bevorzugten Ausführungsform erfolgt die Eindickung mittels der Zugabe von Flockungshilfsmitteln, insbesondere Polymeren, die im Faulungsprozess zumindest teilweise abgebaut werden. Die Flockungshilfsmittel verursachen einen zum Trockensubstanzgehalt überproportionalen Anstieg der Viskosität der behandelten organischen Masse.

Die Viskosität des zuvor mit Polymeren eingedickten Schlamms wird während der Faulung deutlich reduziert. Beispielsweise liegt bei einer Feststoffkonzentration von circa 7% in einem Ausführungsbeispiel die Viskosität der eingedickten organischen Masse bei über 30 mPas, und insbesondere bei circa 40 mPas. Die Viskosität der ausgefaulten organischen Masse mit derselben Feststoffkonzentration liegt hingegen nur bei unter 20 mPas, insbesondere bei circa 14 mPas. Die Viskosität der mit Polymeren angedickten organischen Masse, und insbesondere die Viskosität eines mit Polymeren angedickten Klärschlammes, wird durch die Faulung insbesondere auf unter die Hälfte und weitergehend insbesondere auf weniger als ein Drittel der Viskosität der eingedickten organischen Masse reduziert.

Dies wird dadurch ermöglicht, dass der Faulungsprozess die organischen Anteile der organischen Masse, insbesondere des Klärschlamms, und die zur Eindickung verwendeten Polymere bzw. die durch die Einwirkung der Polymere gebildeten Zellverbände abbaut. Folglich liegt bei der zur Rezirkulation aus dem Faulbehälter entnommenen organischen Masse bereits eine geringere Viskosität vor. Damit verringern sich die Druckverluste und die Neigung zur Ausbildung von Inkrustierungen und Anhaftungen im Wärmetauscher der thermischen Behandlung. Weiterhin bedingt die verringerte Viskosität im Faulbehälter eine höhere Durchmischung im Wärmetauscher, wodurch höhere Wärmeübergangswerte erreicht werden.

Die Erfindung stellt weiterhin eine Vorrichtung zur Behandlung von organischer Masse, insbesondere Klärschlamm, bereit, die einen Faulbehälter, einen Eindicker und eine Rezirkulationsleitung aufweist, wobei der Eindicker stromaufwärts vom Faulbehälter angeordnet ist, und die Rezirkulationsleitung ausgelegt ist, organische Masse aus dem Faulbehälter direkt einer thermischen Behandlungsvorrichtung zuzuführen, und die behandelte organische Masse wieder dem Faulbehälter zuzuführen. Die direkte Zuführung der organischen Masse aus dem Faulbehälter zur thermischen Behandlungsvorrichtung wird insbesondere durch eine direkte Verbindung über einer Leitung ermöglicht. Durch die Rezirkulationsleitung und die darin vorgesehene thermische Behandlungsvorrichtung kann eine Verbesserung der Durchmischung der organischen Masse im Faulbehälter und eine Reduzierung der Viskosität der rückgeführten behandelten organischen Masse erreicht werden, sodass im Faulbehälter eine effiziente Faulung durchgeführt wird, selbst wenn die organische Masse im Eindicker vor dem Faulbehälter auf höhere Werte eingedickt wird, als es im Stand der Technik möglich ist. Weiterhin kann die thermische Behandlung der Zellbestandteile ein Aufschließen der rückgeführten organischen Masse bedingen.

Vorteilhafterweise ist der Eindicker direkt stromaufwärts vor dem Faulbehälter angeordnet. Insbesondere ist der Eindicker direkt über eine Leitung mit dem Faulbehälter verbunden. Der Faulbehälter weist vorteilhafterweise einen Auslass auf, über den ausgefaulte organische Masse abgeführt wird. Vorteilhafterweise ist der Auslass im oberen Bereich des Faulbehälters vorgesehen, sodass ein geringerer Feststoffanteil abgeführt wird, und somit die Feststoffkonzentration im Faulbehälter hochgehalten wird. Weiterhin kann die Rezirkulationsleitung besonders bevorzugt von einem unteren Bereich des Faulbehälters ausgehen, sodass organische Masse mit einer erhöhten Feststoffkonzentration über die thermische Behandlungsvorrichtung rezirkuliert wird.

In einer Ausführungsform ist der Faulbehälter ein Faulturm. Die Größe des Faulturms ist dabei abhängig vom Zulaufstrom, vom Massenstrom und von der zulässigen Raumbelastung. Die zulässige Raumbelastung wird durch die gesamte Feststoffmasse oder organische Feststoffmasse bezogen auf die Zeiteinheit und das zur Verfügung stehende Faulbehältervolumen bestimmt.

Bei dem Eindicker handelt es sich insbesondere um einen statischen oder mechanischen Eindicker, zum Beispiel einen Bandeindicker, Trommel-Eindicker oder eine Zentrifuge. Insbesondere sind bei mechanischen Eindickern unter Zuhilfenahme von Flockungshilfsmitteln die gewünschten Feststoffkonzentrationen im eingedickten Schlamm im Bereich von 7% bis 20%, und bevorzugt von 10% bis 15%, realisierbar. Erfindungsgemäß wird die kritische Viskosität, bei der eine ausreichende Faulraumdurchmischung gerade noch aufrecht erhalten werden kann, erst bei deutlich höheren Raumbelastungen erreicht. Die Faulung mit höheren Feststoff-Konzentrationen ist effizienter und führt zu einem deutlich verringerten Faulraumvolumen und somit zu reduzierten Investitions- und Betriebskosten.

Vorteilhafterweise ist die thermische Behandlungsvorrichtung ein indirekter Wärmetauscher. Darin wird insbesondere Wärme über eine Grenzfläche, vorteilhafterweise gebildet aus Metall, von einem Wärmeträgermedium, beispielsweise Wasser oder Thermalöl, zur organischen Masse übertragen. Das Wärmeträgermedium wird insbesondere durch ein Heizelement erhitzt, wobei in anderen Ausführungsbeispielen das Wärmemittel auch Prozesswärme aus einem anderen Bereich des Prozesses abführen kann, sodass eine Rückführung von Wärme möglich ist. In anderen Ausführungsformen kann die thermische Behandlungsvorrichtung auch durch eine direkte Erhitzung, beispielsweise durch eine Erhitzung über elektrische Heizelemente oder einen Brenner erfolgen. In weiteren Ausführungsformen kann auch ein direkter Wärmetauscher vorgesehen werden, in dem das Wärmemittel, beispielsweise heißer Dampf, direkt in die organische Masse eingebracht wird.

Die Erfindung wird nun anhand einer bevorzugten Ausführungsform weitergehend erläutert:

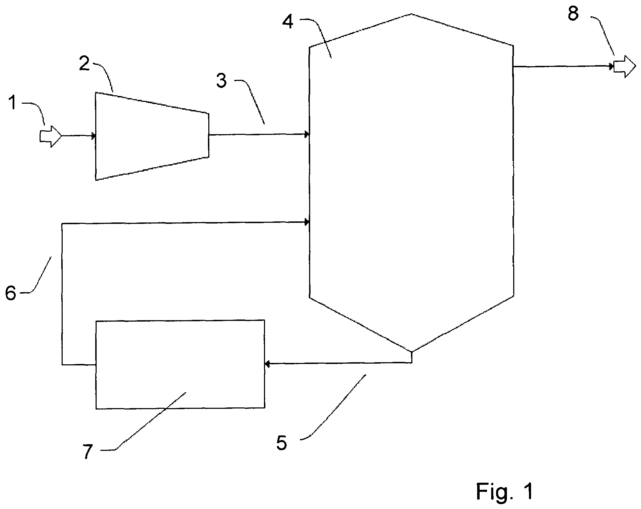

Figur 1 zeigt eine schematische Darstellung einer Ausführungsform der erfindungsgemäßen Vorrichtung.

Darin wird die zu behandelnde organische Masse 1 in Form von Klärschlamm zunächst einem Eindicker 2 zugeführt, in dem mechanisch und/oder durch die Zugabe von Flockungshilfsmitteln eine Erhöhung der Feststoffkonzentration auf über 7% und bevorzugt auf über 10% erreicht wird.

Die eingedickte organische Masse wird dann über eine Dickschlammleitung 3 direkt einem Faulbehälter 4 in Form eines Faulturms zugeführt. Im Faulturm 4 wird die organische Masse bevorzugt in einem Temperaturbereich von zwischen 25°C und 60°C, weitergehend bevorzugt im mesophilen Bereich zwischen 33°C und 39°C, vorgehalten. Diese Temperatur wird sensorisch überwacht und geregelt.

Aufgrund der erhöhten Viskosität der organischen Masse durch die Eindickung kommt es zu einer effizienten Ausfaulung, wobei zudem diese bei Bakterienrückhaltung optimiert werden kann. Damit dennoch eine ausreichende Faulraumdurchmischung ermöglicht werden kann und weiterhin ein Aufschließen der organischen Masse mittels thermischer Behandlung erfolgen kann, ist eine Rezirkulationsleitung 5,6 vorgesehen, deren erster Abschnitt 5 von einem unteren Bereich des Faulturms 4 zu einer thermischen Behandlungsvorrichtung 7 in Form einer Desintegrationsanlage führt. Die thermische Behandlungsvorrichtung 7 kann als Stellglied für die Regelung der Temperatur im Faulbehälter angesteuert werden. Insbesondere kann die thermische Behandlungsvorrichtung als alleinige Wärmequelle für die Regelung der Temperatur im Faulbehälter vorgesehen sein.

Die thermische Desintegrationsanlage 7 ist als indirekter Wärmetauscher ausgebildet, in dem die organische Masse auf einen Temperaturbereich von circa 120°C bis 170°C erwärmt wird. Die Aufenthaltszeit der organischen Masse in der Desintegrationsanlage liegt zwischen 10 und 60 Minuten. Ein zweiter Abschnitt 6 der Rezirkulationsleitung führt von der thermischen Desintegrationsanlage 7 zurück in den Faulturm 4. D.h., mittels der Rezirkulationsleitung 5, 6 wird Faulschlamm der thermischen Desintegrationsanlage zugeführt und nach erfolgter thermischer Behandlung wieder in den Faulturm 4 rückgeführt.

Durch die thermische Behandlung kann eine signifikante Verminderung der Viskosität der organischen Masse bewirkt werden, und somit ist es möglich, die organische Masse im Zulauf zum Faulturm, d.h. in der Dickschlammleitung 3, nicht nur wie im Stand der Technik auf eine Feststoffkonzentration von circa 5% bis 7%, sondern auf Werte über 7% und bis zu 20% einzudicken. Da durch die in der Rezirkulationsleitung vorgesehene thermische Behandlungsvorrichtung 7 die Viskosität der organischen Masse signifikant reduziert werden kann, wird die maximal zulässige Feststoffkonzentration am Eingang der Faulungsstufe deutlich erhöht. Bei gleicher Feststoff-Masse im Zulauf und gleicher hydraulischer Aufenthaltszeit in der Faulung kann somit der Faulturm deutlich kleiner gewählt werden, ohne negative Auswirkung auf das Ergebnis der Faulung befürchten zu müssen.

Der ausgefaulte Schlamm 8 wird dem Faulturm entnommen und nachfolgenden Stufen zugeführt.

## Patentansprüche

1. Verfahren zur Behandlung von organischer Masse, insbesondere Klärschlamm, umfassend:
- Eindicken der organischen Masse zur Erhöhung der Feststoffkonzentration,
- Direkte Zuführung der eingedickten, organischen Masse in einen Faulbehälter (4),
- Entnahme von organischer Masse aus dem Faulbehälter (4) mittels einer Rezirkulationsleitung (5),
- Thermische Behandlung der entnommenen, organischen Masse, und
- Rückführung der thermisch behandelten, organischen Masse in den Faulbehälter (4).

2. Verfahren nach Anspruch 1, wobei die thermische Behandlung eine thermische Hydrolyse ist.

3. Verfahren nach Anspruch 1 oder 2, wobei die organische Masse bei der thermischen Behandlung auf eine Temperatur von 120°C bis 170 °C erwärmt wird.

4. Verfahren nach Anspruch 3, wobei die organische Masse bei der thermischen Behandlung für 20 bis 60 Minuten im genannten Temperaturbereich gehalten wird.

5. Verfahren nach einem der vorangehenden Ansprüche, wobei die organische Masse nach erfolgter thermischer Behandlung abgekühlt wird, bevor die thermisch behandelte organische Masse erneut dem Faulbehälter (4) zugeführt wird.

6. Verfahren nach einem der vorangehenden Ansprüche, wobei das Eindicken der organischen Masse bis zu einer Feststoffkonzentration im Bereich von 7% bis 20%, bevorzugt 10% bis 15% erfolgt.

7. Verfahren nach einem der vorangehenden Ansprüche, wobei das Verhältnis der Mengenflüsse der Zuführung zum Faulbehälter (4) und der Rückführung über die thermische Behandlung im Bereich von 0,5 bis 1,5 liegt.

8. Verfahren nach einem der vorangehenden Ansprüche, wobei die organische Masse für die thermische Behandlung mittels der Rezirkulationsleitung (5) direkt aus dem Faulbehälter (4) in ein Wärmetauschersystem eingeleitet wird.

9. Verfahren nach einem der vorangehenden Ansprüche, wobei die organische Masse Schlamm aus einer biologischen Abwasserbehandlungsanlage ist.

10. Verfahren nach einem der vorangehenden Ansprüche, wobei die Eindickung mittels der Zugabe von Polymeren zur organischen Masse erfolgt, die im Faulungsprozess zumindest teilweise abgebaut werden.

11. Vorrichtung zur Behandlung von organischer Masse, insbesondere Klärschlamm, umfassend:
- einen Faulbehälter (4), und
- einen Eindicker (2), der stromaufwärts vom Faulbehälter (4) angeordnet ist,
**gekennzeichnet durch**
- eine Rezirkulationsleitung (5, 6), die ausgelegt ist, organische Masse aus dem Faulbehälter (4) direkt einer thermischen Behandlungsvorrichtung (7) zuzuführen, und die behandelte organische Masse wieder dem Faulbehälter (4) zuzuführen.

12. Vorrichtung nach Anspruch 11, wobei der Eindicker (2) direkt stromaufwärts vor dem Faulbehälter (4) angeordnet ist.

13. Vorrichtung nach Anspruch 11 oder 12, wobei der Faulbehälter (4) einen Auslass aufweist, über den ausgefaulte organische Masse abgeführt wird.

14. Vorrichtung nach einem der Ansprüche 11 bis 13, wobei der Faulbehälter (4) ein Faulturm ist.

15. Vorrichtung nach einem der Ansprüche 11 bis 14, wobei die thermische Behandlungsvorrichtung (7) ein indirekter Wärmetauscher ist.

## Claims

1. Method for the treatment of organic matter, in particular sewage sludge, comprising:
- thickening the organic matter to increase the solids concentration,
- directly feeding the thickened organic matter into a digester (4),
- removing organic matter from the digester (4) by way of a recirculation line (5),
- thermally treating the removed organic matter, and
- returning the thermally treated organic matter back to said digester (4).

2. Method according to claim 1, where the thermal treatment is thermal hydrolysis.

3. Method according to claim 1 or 2, wherein the organic matter is heated to a temperature of 120° C to 170° C during the thermal treatment.

4. Method according to claim 3, wherein the organic matter is maintained for 20 to 60 minutes in the indicated temperature range during the thermal treatment.

5. Method according to any one of the preceding claims, wherein the organic matter is cooled after completion of the thermal treatment, before the thermally treated organic matter is returned to the digester (4).

6. Method according to any one of the preceding claims, wherein the organic matter is thickened to a solids concentration in the range from 7% to 20%, preferably from 10% to 15%.

7. Method according to any one of the preceding claims, wherein the ratio of the volume flows of the supply to the digester (4) and the return via the thermal treatment is in a range from 0.5 to 5, advantageously from 0.5 to 1.5.

8. Method according to any one of the preceding claims, wherein the organic matter is introduced by way of the recirculation line (5) directly from the digester (4) into a heat exchanger system for the thermal treatment.

9. Method according to any one of the preceding claims, wherein said organic matter is sludge from a biological wastewater treatment plant.

10. Method according to any one of the preceding claims, wherein the thickening is effected by way of addition of polymers to the organic matter, which are decomposed in the digestion process at least in part.

11. Device for treatment of organic matter, in particular sewage sludge, comprising:
- a digester (4), and
- a thickener (2) arranged upstream of the digester (4),
**characterized by**
- a recirculation line (5, 6) configured to directly supply organic matter from the digester (4) to a thermal treatment device (7) and to return said treated organic matter to said digester (4).

12. Device according to claim 11, wherein the thickener (2) is arranged directly upstream of the digester (4).

13. Device according to claim 11 or 12, wherein said digester (4) comprises an outlet through which digested organic matter is removed.

14. Device according to any one of claims 11 to 13, wherein the digester (4) is a digestion tower.

15. Device according to any one of claims 11 to 14, wherein the thermal treatment device (7) is an indirect heat exchanger.

## Revendications

1. Procédé de traitement d'une matière organique, en particulier de la boue d'épuration, comprenant les étapes de :
- épaississement de la matière organique afin d'augmenter la concentration en substances solides,
- alimentation directe de la matière organique épaissie dans un digesteur (4),
- extraction de la matière organique hors du digesteur (4) au moyen d'une conduite de recirculation (5),
- traitement thermique de la matière organique extraite, et
- remise en circulation dans le digesteur (4) de la matière organique traitée thermiquement.

2. Procédé selon la revendication 1, dans lequel le traitement thermique est une hydrolyse thermique.

3. Procédé selon la revendication 1 ou 2, dans lequel la matière organique est chauffée à une température comprise entre 120°C et 170°C lors du traitement thermique.

4. Procédé selon la revendication 3, dans lequel la matière organique est maintenue dans ladite plage de température pendant 20 à 60 minutes lors du traitement thermique.

5. Procédé selon l'une quelconque des revendications précédentes, dans lequel la matière organique est refroidie après achèvement du traitement thermique, avant que la matière organique traitée thermiquement ne soit à nouveau acheminée vers le digesteur (4).

6. Procédé selon l'une quelconque des revendications précédentes, dans lequel l'épaississement de la matière organique est mis en oeuvre jusqu'à une concentration en substances solides située dans la plage comprise entre 7 % et 20 %, de manière préférée comprise entre 10 % et 15 %.

7. Procédé selon l'une quelconque des revendications précédentes, dans lequel le rapport des flux massiques de l'acheminement vers le digesteur (4) et de la remise en circulation à l'issue du traitement thermique se situe dans la plage comprise entre 0,5 et 1,5.

8. Procédé selon l'une quelconque des revendications précédentes, dans lequel la matière organique est introduite directement dans un système échangeur de chaleur à partir du digesteur (4) au moyen de la conduite de recirculation (5) en vue du traitement thermique.

9. Procédé selon l'une quelconque des revendications précédentes, dans lequel la matière organique est une boue provenant d'une station de traitement biologique des eaux usées.

10. Procédé selon l'une quelconque des revendications précédentes, dans lequel l'épaississement est mis en oeuvre en ajoutant à la matière organique des polymères qui sont au moins partiellement dégradés au cours du processus de digestion.

11. Dispositif de traitement de matière organique, en particulier de boue d'épuration, comprenant :
- un digesteur (4), et
- un épaississeur (2) agencé en amont du digesteur (4),
**caractérisé par**
- une conduite de recirculation (5, 6) conçue pour acheminer de la matière organique en provenance du digesteur (4) directement vers un dispositif de traitement thermique (7) et pour renvoyer la matière organique traitée vers le digesteur (4).

12. Dispositif selon la revendication 11, dans lequel l'épaississeur (2) est agencé immédiatement en amont du digesteur (4).

13. Dispositif selon la revendication 11 ou 12, dans lequel le digesteur (4) présente une sortie par l'intermédiaire de laquelle la matière organique digérée est évacuée.

14. Dispositif selon l'une quelconque des revendications 11 à 13, dans lequel le digesteur (4) est une tour de digesteur.

15. Dispositif selon l'une quelconque des revendications 11 à 14, dans lequel le dispositif de traitement thermique (7) est un échangeur de chaleur à contact indirect.
